Europäisches Patentamt

European Patent Office ·

Office européen des brevets

(19)

(11) Numéro de publication: **0 172 053**
**B1**

(12) **FASCICULE DE BREVET EUROPEEN**

(45) Date de publication du fascicule du brevet:
**14.09.88**

(51) Int. Cl.⁴: **F 16 K 3/316**, F 16 K 3/02

(21) Numéro de dépôt: **85401303.4**

(22) Date de dépôt: **27.06.85**

(54) **Vanne auto-nettoyante pour produits poudreux, granuleux et pâteux.**

(30) Priorité: **11.07.84 FR 8411042**

(43) Date de publication de la demande:
**19.02.86 Bulletin 86/8**

(45) Mention de la délivrance du brevet:
**14.09.88 Bulletin 88/37**

(84) Etats contractants désignés:
**AT BE CH DE GB IT LI LU NL SE**

(56) Documents cités:
**EP - A - 0 048 780**
**FR - A - 1 452 707**
**US - A - 1 675 986**

(73) Titulaire: **ETABLISSEMENTS TROUVAY & CAUVIN Société Anonyme, 58, rue Général Chanzy, F-76600 Le Havre (FR)**

(72) Inventeur: **Besnard, Henri, 8, Place du Général Leclerc, F-76400 Fecamp (FR)**
Inventeur: **Fremau, Daniel, Immeuble Ravel Parc de la Rivière Appartement 40, F-76400 Fecamp (FR)**

(74) Mandataire: **Rodhain, Claude, Cabinet Claude Rodhain 30, rue la Boétie, F-75008 Paris (FR)**

EP 0 172 053 B1

# Description

La présente invention a pour objet une vanne du type à guillotine, plus spécialement destinée aux produits poudreux ou granulés et également aux produits pâteux, comme par exemple, la pâte à papier.

On connaît déjà un tel type de vanne à guillotine auto-nettoyante (voir brevet européen n° 0048 780 du 1 octobre 1980) Cette vanne est munie de part et d'autre de la lame mobile, formant guillotine, de profilés en forme de règle allongée, notablement plus longs que la lame, empêchant l'amas de produits poudreux dans les glissières. En outre, le bord inférieur actif de la lame venant reposer contre une butée lors de la fermeture de la vanne est biseauté afin de faciliter l'étanchéité.

Or, il est apparu que quelques modifications apportées à cette vanne à guillotine permettaient d'en améliorer le fonctionnement de manière importante.

En effet, on a pu relever certaines imperfections lors du fonctionnement de la vanne, décrite ci-dessus, et en particulier on a pu constater que le revêtement de stellite effectué sur la pelle, la butée, et les glissières des corps avant et arrière de la vanne n'assuraient qu'une médiocre tenue de ces pièces à l'usure.

Or, l'usure rapide des pièces entraîne le remplacement fréquent de pièces coûteuses.

Par ailleurs, l'usure des pièces entraîne l'apparition de légers jeux entre les pièces, ce qui diminue la précision de l'étanchéité.

On connaît déjà des vannes à guillotine pour fluides ou liquides (voir brevet US-A-1 675 986) dans lesquelles la butée de la pelle est logée dans le corps de vanne de façon à pouvoir se déplacer en translation entre des positions haute et basse; mais les problèmes d'usure s'y sont pas envisagés puisque des fluides ou des liquides n'érodent pas les parties constitutives de la vanne comme le font des produits poudreux.

Le but de l'invention est donc de réaliser une vanne permettant de rattraper l'usure des faces actives de fermeture de ladite vanne.

Un autre but de l'invention est de réaliser des pièces interchangeables permettant de ne remplacer que certaines parties de la vanne, lorsque celles-ci sont usées.

Un troisième but de l'invention est de diminuer le coût de revient de chaque vanne (en limitant l'utilisation de matériaux onéreux en résistant à l'usure, à des pièces très précises) et leur coût de maintenance.

L'utilisation de pièces interchangeables entaîne quelques problèmes d'étanchéité que l'invention a pour but de résoudre également.

Ces buts de l'invention ainsi que d'autres qui apparaîtront par la suite sont atteints notamment à l'aide d'une vanne à guillotine pour produits poudreux granuleux et pâteux, comportant une pelle mobile en translation entre un corps avant et un corps arrière de la vanne, les deux corps étant percés chacun d'un orifice pouvant être sélectivement masqué ou découvert par la pelle montée coulissante entre les corps, cette pelle mobile étant pourvue latéralement de deux profilés en forme de règle allongée, solidaires de la pelle et notablement plus longs que cette pelle, ces profilés formant les bras de la pelle et coulissant dans les glissières solidaires des deux corps de la vanne en remplissant chacun tout l'espace de la glissière et en interdisant au produit traversant la vanne de pénétrer dans les glissières et de s'y accumuler, cette vanne comporte en outre une butée de réception de la pelle placée entre les deux corps, ladite butée présentant un bord supérieur semi-circulaire correspondant au profil du bord inférieur de la pelle,

vanne caractérisée en ce qu'un manchon circulaire amovible en acier traité, est monté à force et de façon étanche, dans la face externe de l'orifice de chacun des corps avant et arrière de la vanne, un joint torique assurant l'étanchéité entre chaque manchon et les corps, et en ce que la butée de réception de la pelle est percée, dans sa partie médiane, d'un orifice oblong traversé par une vis fixée par rapport aux corps, cet orifice délimitant ainsi deux positions extrêmes entre lesquelles la butée peut coulisser:

— une position haute dans laquelle le bord supérieur semi-circulaire de la butée affleure avec le pourtour inférieur des orifices des manchons montés dans les corps avant et arrière de la vanne,

— une position basse vers laquelle la butée est entraînée par l'action de la pelle lors de la fermeture de la vanne, ladite butée étant liée à un dispositif de rappel en position haute, maintenant la butée et la pelle en contact lors de la phase finale de fermeture et de la phase initiale d'ouverture de la vanne.

D'autres caractéristiques et avantages de l'invention apparaitront à la lecture de la description suivante et des dessins annexés dans lesquels:

— la fig. 1A représente le corps de vanne, en coupe sur la demi-vue gauche et en vue de face sur la demi-vue droite; la butée y est montrée en position basse.

— la fig. 1B représente un mode de réalisation du mécanisme de manœuvre de la vanne, situé dans le prolongement du corps de vanne présenté en fig. 1A;

— la fig. 2 représente une vue latérale en coupe du corps de vanne de la fig. 1; la butée y est toutefois en position haute, et est encore (ou déjà) en contact avec la pelle.

— la fig. 3 représente une variante du dispositif de rappel en position haute de la butée escamontable.

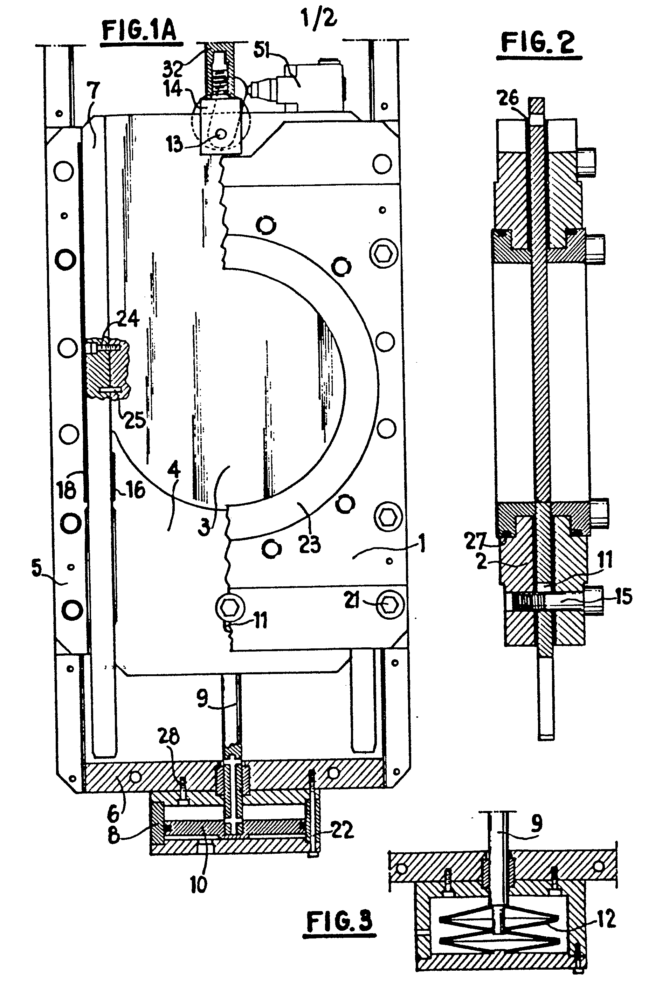

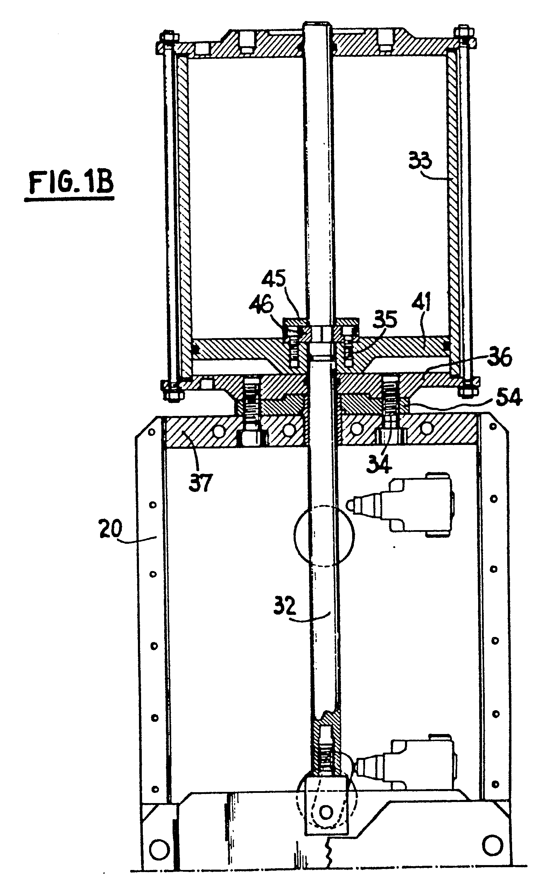

On reconnait en fig. 1A les éléments principaux de la vanne à guillotine, à savoir le corps avant 1 et le corps arrière 2 de la vanne, la pelle 3 – en position fermée – en contact avec la butée 4, et les bras 7 de pelle coulissant dans les glissières 5 des corps 1 et 2.

Selon une caractéristique essentielle de la présente invention, les bras de pelle 7, rapportés de part et d'autre de la lame ou pelle 3, sont amovibles. A cet effet, leur fixation est réalisée au moyen d'au moins une goupille de centrage 25, et d'au moins une vis 24. On note que la tête de la vis 24 est noyée dans le bras de pelle 7 et est accessible lorsque la pelle se trouve en position haute, afin de permettre une désolidarisation aisée des bras de pelle 7.

Selon un mode de réalisation préférentiel de l'invention, la butée 4 est escamotable. Ceci est obtenu en perçant la butée 4 dans sa partie médiane, d'un orifice oblong 11 traversé par une vis 15 qui délimite les deux positions extrêmes de la butée 4. La partie filetée de la vis 15 est engagée dans le corps arrière 2 de la vanne, et sa tête repose contre le corps avant 1, de façon à assurer simultanément la fixation des deux corps l'un par rapport à l'autre de la même manière que les vis 21.

Le déplacement autorisé de la butée 4 permet son escamotage vers le bas en fin de course de la pelle 3 lors de la fermeture de la vanne. A cette fin, les bords latéraux de la butée se présentent en forme de languette coulissant dans une rainure pratiquée dans la face interne des bras de pelle 7.

Cette liaison coulissante permet le déplacement relatif des bras de pelle 7 par rapport à la butée 4 lors de la partie initiale de la fermeture de la pelle 3, et de la partie finale de son ouverture. En fin de fermeture et en début d'ouverture, le bord actif de la pelle reste en contact avec la butée, et la butée accompagne le mouvement des bras de pelle grâce à un dispositif de rappel.

Selon le mode de réalisation présenté en fig. 1A, le dispositif de rappel en position haute de la butée mobile 4, est constitué d'un vérin pneumatique rapporté sur la pièce de fond 6 de la vanne.

Ce vérin pneumatique comprend un piston 10 circulant dans une chambre de vérin et lié à une tige de butée 9 dont l'extrémité supérieure est fixée à la base de la butée 4. Le vérin pneumatique est fixé sur la pièce de fond 6 au moyen de vis 22, 28. Lorsque la chambre inférieure du vérin pneumatique est mise sous pression, la butée 4 est soumise à une force verticale de rappel, transmise par l'intermédiaire de la tige de butée 9. Ainsi, lors de l'ouverture de la pelle 3, la butée 4 reste plaquée contre le bord actif de la pelle jusqu'à ce que ladite butée ait atteint la position haute (fig. 2). Au delà, pelle et butée se désolidarisent.

Selon un autre mode de réalisation du dispositif de rappel en position haute de la butée mobile 4, (fig. 3), le vérin pneumatique est remplacé par un jeu de rondelles élastiques 12 déformables du type rondelles BELLEVILLE. Ces rondelles, empilées l'une sur l'autre, sont écrasées par la tige de butée 9 lors de la descente de la butée 4 en position basse, et emmagasinent alors la force de rappel qui ramènera la butée 4 en position haute lors de l'ouverture de la pelle 3. Tout principe de construction plaçant le jeu de rondelles élastiques déformables en appui entre la tige 9 liée rigidement à la butée mobile 4, et le corps de la vanne est réalisable. Il est de l'intension des déposants de protéger également tout autre dispositif de rappel en position haute de la butée mobile 4 qui fonctionne dès le début de l'ouverture de la pelle 3, et amène immédiatement le bord de travail de ladite butée 4 en affleurement avec le pourtour inférieur des orifices des corps avant et arrière de la vanne.

Selon l'invention, un manchon circulaire 23 amovible en acier traité est monté à force dans chacun des orifices de passage de produit pratiqués dans les corps avant et arrière de la vanne. A cet effet, les manchons circulaires présentent à leur périphérie un épaulement de forme complémentaire à celui pratiqué dans les corps 1, 2. Un joint torique 27 est monté dans une gorge pratiquée à la périphérie de chaque manchon. Selon un mode de réalisation préférentiel, les manchons sont réalisés en acier nitruré. Ils sont aisément remplaçables en cas d'usure, par simple extraction des manchons usés, et frittage des nouveaux manchons. Cette conception présente un très grand intérêt pour la remise en état de la vanne.

L'étanchéité de la vanne est réalisée en utilisant exclusivement des joints en poly-tétrafluorure d'éthylène.

A cet effet, la face interne de chacun des corps avant 1 et arrière 2 de la vanne est recouverte d'un joint plat 26 sur toute sa surface. Le joint 26 est du type en PTFE fritté sur un lit de silice, et connu sous le nom de joint «DUPLEX».

D'autre part, un joint 18 et PTFE est inséré dans la face interne de chacune des glissières 5 des corps 1 et 2, et vient s'appliquer contre la face externe coulissante des bras de pelle. Ces joints 18, logés dans une cavité usinée des glissières 5 assurent l'étanchéité de la rainure de la glissière dans laquelle coulisse chaque bras de pelle, et donc en quelque sorte l'auto-nettoyage de la vanne.

Un joint 16 identique est inséré dans une cavité usinée dans chacun des bords externes de la butée mobile 4, afin de s'appliquer contre la face externe coulissante des bras de pelle et assurer ainsi l'étanchéité de la rainure de coulissement du bras de pelle 7 par rapport à la butée 4.

On note que ces joints 18 et 16 coopèrent avec le joint plat 26 «DUPLEX» pour assurer l'ensemble de l'étanchité de la vanne. Cette conception élimine les problèmes de montage rencontrés dans l'art antérieur tel que EP-A-48780.

Les matériaux utilisés pour les différents éléments sensibles du corps de vanne conditionnent sa résistance à l'usure, et revêtent de ce fait une importance particulière. Selon l'invention la pelle 3, la butée 4, et les glissières 5 de la vanne sont réalisées en acier traité par nitruration ionique sur une profondeur de 2/10ème de mm environ. Selon un autre mode de réalisation, ces éléments sont revêtus d'un dépôt d'oxyde de chrome. Ils peuvent être également réalisés en fonte blanche. Les essais effectués avec ces différents matériaux ont permis de constater une tenue à l'usure de 6 mois dans des conditions d'utilisation données à comparer avec une tenue à l'usure d'un mois environ obtenue avec le revêtement de stellite prévu dans EP-A-48780.

La fig. 1B présente un mode de réalisation du mécanisme de manœuvre de la pelle 3 de la vanne selon l'invention. Ce mécanisme est constitué d'un vérin 33 superposé au corps de vanne, auquel il est lié par l'intermédiaire de deux profilés en U 20 rapportés et fixés de part et d'autre d'un fer plat de liaison 37. Le flasque inférieur 36 du vérin 33 est fixé sur ledit fer plat 37 au moyen de deux vis 34 et d'un flasque support 54. Le piston 41 du vérin est lié à la tige de vérin 32 au moyen des deux vis de liaison 35, d'une bague de butée 45 et d'une rondelle d'entrainement 46.

La tige de vérin 32 est reliée à son extrémité inférieure à la pelle 3 par l'intermédiaire de la chape 14 et de la vis de liaison 13. Deux interrupteurs 51 captent chacune des fins de course de la pelle 3.

Selon un mode de fonctionnement préférentiel, l'admission de la pression d'air s'effectue simultanément dans les deux vérins pneumatiques inférieur et supérieur. Il est clair toutefois que dans le vérin supérieur, la pression est inversée pour l'ouverture et la fermeture de la vanne.

## Revendications

1. Vanne à guillotine véhiculant des produits poudreux, granuleux ou pâteux, comportant une pelle (3) mobile en translation entre un corps avant (1) et un corps arrière (2) de la vanne, les deux corps (1, 2) étant percés chacun d'un orifice pouvant être sélectivement masqué ou découvert par la pelle montée coulissante entre les corps, cette pelle mobile étant pourvue latéralement de deux profilés (7) en forme de règle allongée, solidaires de la pelle et notablement plus longs que cette pelle, ces profilés (7) formant les bras de la pelle et coulissant dans des glissières (5) solidaires des deux corps (1, 2) de la vanne en remplissant chacun tout l'espace de la glissière (5) et en interdisant au produit traversant la vanne de pénétrer dans les glissières (5) et de s'y accumuler, cette vanne comporte en outre une butée de réception de la pelle (4) placée entre les deux corps (1, 2), ladite butée présentant un bord supérieur semi-circulaire correspondant au profil du bord inférieur de la pelle,

vanne caractérisée en ce qu'un manchon circulaire (23) amovible en acier traité, est monté à force et de façon étanche, dans la face externe de l'orifice de chacun des corps avant (1) et arrière (2) de la vanne, un joint torique (27) assurant l'étanchéité entre chaque manchon (23) et les corps (1) et (2), et en ce que la butée (4) de réception de la pelle (2) est percée, dans sa partie médiane, d'un orifice oblong (11) traversé par une vis (15) fixée par rapport aux corps (1, 2), cet orifice délimitant ainsi deux positions extrêmes entre lesquelles la butée peut coulisser:

— une position haute dans laquelle le bord supérieur semi-circulaire de la butée affleure avec le pourtour inférieur des orifices des manchons (23) montés dans les corps avant (1) et arrière (2) de la vanne,

— une position basse vers laquelle la butée (4) est entraînée par l'action de la pelle (3) lors de la fermeture de la vanne, ladite butée (4) étant liée à un dispositif de rappel en position haute, maintenant la butée (4) et la pelle (3) en contact lors de la phase finale de fermeture et de la phase initiale d'ouverture de la vanne,

2. Vanne à guillotine selon la revendication 1, caractérisée en ce que la face interne de chacun des corps avant (1) et arrière (2) de la vanne est recouverte d'un joint (26) plat collé, du type en polytétrafluoréthylène fritté sur un lit de silice.

## Patentansprüche

1. Schieberventil für pulverige, körnige und teigartige Produkte, bestehend aus einem zwischen einem vorderen Gehäuseteil (1) und einem hinteren Gehäuseteil (2) beweglichen Schieber (3), die beide jeweils eine durch an zwischen den Gehäuseteilen gleitend angeordnete Schieber verdeckbare oder freilegbare Öffnung aufweisen, wobei der bewegliche Schieber mit zwei seitlich angeordneten, fest mit dem Schieber verbundenen und deutlich länger als diese ausgebildeten Profilteilen (7) in Form langgestreckter Leisten versehen ist, die in mit den zwei Gehäuseteilen (1, 2) des Ventils fest verbundenen Führungen (5) gleitende Arme des Schiebers darstellen und jeweils den ganzen Raum der Führungen (5) ausfüllen und die das Ventil durchsetzenden Produkte daran hindern, in die Führungen (5) einzudringen und sich dort zu sammeln, desweiteren aus einem zwischen den Gehäuseteilen (1, 2) angeordneten, einen halbkreisförmigen, dem unteren Rand des Schiebers entsprechenden oberen Rand aufweisenden Anschlag (4) für den Schieber, dadurch gekennzeichnet, dass eine kreisförmige, abnehmbare Manschette (23) aus vergütetem Stahl fest und undurchlässig an der Aussenseite der Öffnung jedes der vorderen und hinteren Gehäuseteile (1, 2) angeordnet ist, wobei ein O-Ring (27) jeweils den Raum zwischen der Manschette (23) und den Gehäuseteilen (1) und (2) abdichtet und dass der Anschlag (4) für den Schieber (3) in seinem mittleren Bereich in Form einer länglichen, von einer relativ zu den Gehäuseteilen (1, 2) befestigten Schraube (15) durchgriffenen Öffnung (11) durchbrochen ist, die dadurch zwei äusserste Stellungen festlegt, zwischen denen der Anschlag gleiten kann:

— eine obere Stellung, in der der halbkreisförmige obere Rand des Anschlags mit dem unteren Teil des äusseren Umfangs der Öffnungen der in den vorderen und hinteren Gehäuseteilen (1, 2) des Ventils montierten Manschetten bündig ist,

— eine untere Stellung, in die der Anschlag (4) durch die Einwirkung des Schiebers (3) beim Schliessen des Ventils gebracht wird, wobei der Anschlag (4) mit einer Vorrichtung zum Rückstellen in die obere Stellung verbunden ist, die Anschlag (4) und Schieber (3) während der letzten Phase des Schliessens und der ersten des Öffnens des Ventils in Berührung miteinander hält.

2. Schieberventil nach Patentanspruch 1, dadurch gekennzeichnet, dass die Innenfläche der vorderen und hinteren Gehäuseteile des Ventils mit einer Dichtungsscheibe (26) des Typs gesintertes Polytetrafluorathylen auf Siliziumdioxidbett beklebt ist.

## Claims

1. Guillotine valve conveying powdery, granular or doughy products, comprising a blade (3) mobile in translation between a front member (1) and a rear member (2) of the valve, the two members (1, 2) each being pierced with an orifice which is capable of being selectively blocked or unblocked by the blade which is mounted slidingly between the members, said mobile blade being provided laterally with two profile members (7) in the form of an elongated guide, integral with the blade and, notably, longer than said blade, these profile members (7) forming the arms of the blade and running in slides (5) integral with the two members (1, 2) of the valve, each thus filling the entire space of the slide (5) and so preventing the product from passing through the valve and penetrating into the slides (5) and accumulating there; said valve furthermore comprises a stop member (4) for receiving the blade, arranged between the two members (1, 2), said stop member having a semi-circular upper edge corresponding to the profile of the lower edge of the blade;

– said valve being characterised in that a removable circular collar (23), made of processed steel, is force-mounted in tight-sealed manner in the external surface of the orifice of each of the front (1) and rear (2) members of the valve, a toric joint (27) ensuring tight-sealing between each collar (23) and the members (1) and (2); and in that the stop member (4) for receiving the blade (3) is pierced in its median part by an oblong orifice (11) traversed by a screw (15) fixed in relation to the members (1, 2), said orifice thus defining two extreme positions between which the stop member can slide:

– a high position in which the semi-circular upper edge of the stop member lies flush with the lower circumference of the orifices of the collars (23) mounted on the front (1) and rear (2) members of the valve,

– a low position, towards which the stop member (4) is entrained by the action of the blade (3) at the time when the valve is closed, the said stop member (4) being connected to a return device in the high position, the stop member (4) and the blade (3) now being in contact at the time of the final phase of closing and at the time of the initial phase of opening the valve.

2. Guillotine valve according to claim 1, characterised in that the internal surface of each front member (1) and rear member (2) of the valve is covered by a flat glued joint (26) of the type consisting of polytetrafluorethylene sintered on a bed of silica.

**FIG.1A**

**FIG.2**

**FIG.3**

FIG.1B